# EUROPÄISCHE PATENTANMELDUNG

(11) **EP 2 332 628 A1**
(43) Veröffentlichungstag der Anmeldung: **15.06.2011**
(21) Anmeldenummer: 10190310.2
(22) Anmeldetag: 08.11.2010
(51) Int. Cl.: B01D 45/08, B03C 3/36

(54) **Partikelfiltervorrichtung**

(30) Priorität: 10.12.2009 DE 102009057768
(71) Anmelder: MAHLE International GmbH, 70376 Stuttgart (DE)
(72) Erfinder: Blecher, Lutz, 74211, Leingarten (DE); Gorzawski, Steffen, 74906, Bad Rappenau (DE); Lohrengel, Burkhard, 74906, Bad Rappenau (DE); Reinhardt, Alexander, 74626, Bretzfeld (DE); Wierling, Reinhard, 74629, Pfedelbach (DE)
(74) Vertreter: BRP Renaud & Partner

(57) **Zusammenfassung**

Die Erfindung betrifft eine Partikelfiltervorrichtung (1) zum Entfernen von Partikeln aus Abgas einer Feuerungsanlage (2), insbesondere einer Hausfeuerungsanlage, mit mindestens einer Rückhalteeinrichtung (3) zur Montage in einem Abgasströmungspfad (4) der Feuerungsanlage (2), derart, dass die Rückhalteeinrichtung (3) im Betrieb der Feuerungsanlage (2) vom Abgas durchströmt wird.

Partikel aus dem Abgas einer Feuerungsanlage (2) lassen sich besser entfernen, wenn die Rückhalteeinrichtung (3) mehrere Rückhalteelemente (9) aufweist, die relativ zueinander beweglich sind und die im montierten Zustand der Rückhalteeinrichtung (3) im Abgasströmungspfad (4) angeordnet sind, derart, dass sie im Betrieb der Feuerungsanlage (2) vom Abgas umströmt werden.

## Beschreibung

Die vorliegende Erfindung betrifft eine Partikelfiltervorrichtung zum Entfernen von Partikeln aus Abgas einer Feuerungsanlage, insbesondere einer Hausfeuerungsanlage, mit den Merkmalen des Oberbegriffs des Anspruchs 1.

Hausfeuerungsanlagen sowie andere Feuerungsanlagen, wie z. Bsp. bei Heizkraftwerken und Krematorien, werden üblicherweise mit Öl oder Erdgas oder auch mit Holz als Brennstoff betrieben. Die dabei entstehenden Abgase werden üblicherweise über einen Kamin in die Umgebung emittiert. Diese Abgase können Partikel, insbesondere Ruß, enthalten. Strengere Vorschriften zum Schutz vor Schadstoffemissionen und Feinstaub machen es erforderlich, auch bei Feuerungsanlagen, insbesondere bei Hausfeuerungsanlagen, über Maßnahmen zur Reduzierung dieser Emissionen nachzudenken.

Versuche zeigen, dass herkömmliche Partikelfilter in einem Kamin einer Hausfeuerungsanlage nicht verwendbar sind, da sie einen zu großen Durchströmungswiderstand aufweisen. Um diesen erhöhten Durchströmungswiderstand eines herkömmlichen Partikelfilters überwinden zu können, kann grundsätzlich ein Gebläse vorgesehen sein, was jedoch mit vergleichsweise hohen Kosten sowie mit einem zusätzlichen Energieverbrauch verbunden ist.

Eine Partikelfiltervorrichtung der eingangs genannten Art ist aus der DE 101 32 582 C1 bekannt. Bei der bekannten Filtervorrichtung ist in einem Abgasströmungspfad der jeweiligen Feuerungsanlage eine Korona-Entladungseinrichtung angeordnet wird, die eine im Betrieb der Feuerungsanlage vom Abgas durchströmte Rohranordnung aufweist. Diese Einrichtung ist im Abgasströmungspfad stationär, also insbesondere nicht drehbar bzw. drehfest angeordnet. Zur Verbesserung der Entladungswirkung kann innerhalb der Rohre der Rohranordnung jeweils eine stationäre Wendel angeordnet sein, welche den Gasstrom im jeweiligen Rohr mit einem Drall beaufschlagt.

Aus der nachveröffentlichten DE 10 2008 049 211 A1 ist eine weitere Partikelfiltervorrichtung bekannt, die eine drehfest im Abgasströmungspfad angeordnete Korona-Entladungseinrichtung aufweist, der stromab eine drehbare Wendelbürste nachgeordnet ist, die mit einer längs einer den Abgasströmungspfad begrenzenden Innenwand angeordneten Abstreifschiene zusammenwirkt. Die Wendelbürste dient hier als Kollektor der elektrostatisch arbeitenden Filtervorrichtung, benötigt also für ihre Funktion die vorgeschaltete Korona-Entladungseinrichtung.

Derartige aktive Filtervorrichtungen weisen einen vergleichsweise hohen Energieverbrauch auf.

Die vorliegende Erfindung beschäftigt sich mit dem Problem, zum Entfernen von Partikeln aus Abgas einer Feuerungsanlage, insbesondere einer Hausfeuerungsanlage, eine Partikelfiltervorrichtung aufzuzeigen, die sich insbesondere dadurch auszeichnet, dass sie eine ausreichende Filterwirkung besitzt und vergleichsweise preiswert realisierbar ist. Insbesondere soll sie fremdenergiefrei arbeiten.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Partikelfiltervorrichtung mit mindestens einer Rückhalteeinrichtung auszustatten, die mehrere

Rückhalteelemente aufweist. Die Rückhalteeinrichtung ist im Abgasströmungspfad anzuordnen, so dass sie vom Abgas durchströmbar ist. Die einzelnen Rückhalteelemente sind an der Rückhalteeinrichtung so angeordnet, dass sie dann vom Abgas umströmbar sind. Wichtig ist dabei, dass die einzelnen Rückhalteelemente relativ zueinander beweglich sind. Hierdurch können die Rückhalteelemente insbesondere bei einem lokalen Druckanstieg im Abgas ausweichen und im Bereich des Druckanstiegs den Durchströmungswiderstand der Rückhalteeinrichtung reduzieren. Durch die Relativbewegung der Bauteile zueinander ergibt sich eine Selbstreinigungswirkung, die optional über externe Klopfer, Vibratoren oder sonstige Rütteleinrichtungen verstärkt werden kann. Die Rückhalteeinrichtung hat einen extrem niedrigen Durchströmungswiderstand, so dass sie sich auch im Abgasströmungspfad einer Haushaltsfeuerungsanlage anordnen lässt, ohne dass zum Antreiben der Abgase ein zusätzliches Gebläse erforderlich ist. Die frei beweglichen Rückhalteelemente besitzen eine große anströmbare Oberfläche, die sich für die Anlagerung von im Abgas mitgeführten Partikeln eignet. Die im Abgas mitgeführten Partikel, insbesondere Russpartikel, bleiben an den Rückhalteelementen quasi haften, wenn das Abgas unter Umströmung der einzelnen Rückhalteelemente einen Weg durch die Rückhalteeinrichtung sucht. Somit besitzt die hier vorgestellte Partikelfiltervorrichtung durch die umströmbaren Rückhalteelemente eine ausreichende Filterwirkung.

Die Rückhalteeinrichtung und die Rückhalteelemente lassen sich vergleichsweise preiswert realisieren und einfach im Abgasströmungspfad anordnen. Da außerdem kein zusätzliches Gebläse zum Antreiben der Abgasströmung erforderlich ist, lässt sich die hier vorgestellte Partikelfiltervorrichtung mit vergleichsweise geringem Aufwand realisieren.

Die bei der erfindungsgemäßen Partikelfiltervorrichtung verwendete Rückhalteeinrichtung arbeitet passiv und fremdenergiefrei. Insbesondere kann sie drehfest, im Abgasströmungspfad angeordnet sein. Sie ist im Abgasströmungspfad stationär, insbesondere drehfest, so angeordnet, dass sie vom Abgas durchströmt werden muss, so dass es zwangsläufig zu einer Wechselwirkung zwischen den im Abgas mitgeführten Partikeln und den Rückhalteelementen der Rückhalteeinrichtung kommt, die bei der Durchströmung der Rückhalteeinrichtung zwangsläufig umströmt werden. Die Rückhalteeinrichtung selbst ist somit stationär bzw. drehfest im Abgasströmungspfad angeordnet und arbeitet fremdenergiefrei bzw. passiv, um die Partikel aus dem Abgasstrom herauszufiltern. Dabei ist klar, dass zusätzliche aktive und/oder Fremdenergie benötigende Maßnahmen vorgesehen sein können, um die Rückhalteeinrichtung bzw. deren Rückhalteelemente wieder von den angelagerten Verunreinigungen abzureinigen. Beispielsweise kann es hierzu vorgesehen sein, für die Abreinigung der zurückbehaltenen Partikel von den Rückhalteelementen eine, insbesondere stoßartige oder schlagartige, Bewegung in die Rückhalteelemente einzuleiten.

Entsprechend einer vorteilhaften Ausführungsform können zumindest einige der Rückhalteelemente durch Borsten gebildet sein. Diese Borsten erstrecken sich im montierten Zustand der Rückhalteeinrichtung quer zur Abgasströmungsrichtung. Derartige Borsten, z. Bsp. aus Kunststoff, sind vergleichsweise steif, zumindest soweit, dass sie unter ihrem Eigengewicht nicht oder nur unwesentlich durchbiegen, wenn sie quer zur Schwerkraftrichtung angeordnet sind. Typische Borsten besitzen z. Bsp. einen Durchmesser von 0,1-1 mm oder mehr. Die als Borsten ausgestalteten Rückhalteelemente können an der Rückhalteeinrichtung quasi wie bei einer Bürste angeordnet sein, so dass eine Vielzahl von Borsten bezüglich der Abgasströmungsrichtung nebeneinander und hintereinander angeordnet ist. Das Abgas muss bei der Durchströmung dieses Bürstenabschnitts der Rückhalteeinrichtung mehrfach an den hintereinander liegenden Borsten umgelenkt werden, was die Wahrscheinlichkeit einer Anlagerung der mitgeführten Partikel an den Borsten erhöht.

Zusätzlich oder alternativ können einige der Rückhalteelemente durch Lamellen gebildet sein, die sich im montierten Zustand der Rückhalteeinrichtung parallel zur Abgasströmungsrichtung erstrecken. Um diese Lamellen umströmen zu können, muss das Abgas zumindest zweifach umgelenkt werden, was die Anlagerung von Partikeln an den Lamellen begünstigt. Die Lamellen können insbesondere wie ein Vorhang angeordnet sein, der vom Abgas zu durchströmen ist. Die Lamellen können steif wie Borsten oder deutlich biegeweicher ausgestaltet sein, so dass schon geringe Strömungskräfte ausreichen, die Lamellen relativ zueinander zu bewegen.

Zusätzlich oder alternativ können zumindest einige der Rückhalteelemente durch Zotteln gebildet sein. Unter dem Begriff ,,Zotteln" werden im vorliegenden Zusammenhang langgestreckte biegeweiche Elemente verstanden, die bandförmig oder schnurförmig ausgestaltet sein können. Die Zotteln sind im montierten Zustand der Rückhalteeinrichtung einenends im wesentlichen quer zur Abgasströmungsrichtung und anderenends im wesentlichen parallel zur Abgasströmungsrichtung orientiert. Zweckmäßig sind sie dabei an ihrem oberen Ende an der Rückhalteeinrichtung so festgelegt, dass sie sich dort quer zur Abgasströmungsrichtung erstrecken. Aufgrund der Gewichtskraft und ihrer biegeweichen Struktur hängen die Zotteln ausgehend von ihrem fest gehaltenen oberen Ende mehr oder weniger unordentlich herab, so dass sich ihre freien Enden im Wesentlichen parallel zur Abgasströmungsrichtung erstrecken. Durch die räumliche Krümmung der Zotteln können sie besonders einfach so angeordnet werden, dass sie den durchströmbaren Querschnitt des Abgasströmungspfads vollständig ,,verschließen" bzw. ,,versperren", so dass dem Abgas nur der Weg durch die Anordnung der Zotteln hindurch bleibt und die einzelnen Zotteln umströmen muss. Auch dies führt zu einer Verbesserung der Anlagerung der mitgeführten Partikel an den Zotteln.

Entsprechend einer vorteilhaften Ausführungsform kann die Rückhalteeinrichtung zur Montage in einem Kamin der Feuerungsanlage ausgestaltet sein, in dem der Abgasströmungspfad parallel zur Schwerkraftrichtung verläuft. Alternativ ist es ebenso möglich, die Rückhalteeinrichtung innerhalb einer Brennkammer der Feuerungsanlage stromauf des Kamins und stromab einer Brennzone anzuordnen. Zweckmäßig kann die Rückhalteeinrichtung am Übergang zwischen Brennkammer und Kamin angeordnet sein.

Besonders vorteilhaft ist eine Ausführungsform, bei welcher die Rückhalteeinrichtung eine Tragstruktur aufweist, an der die Rückhalteelemente angebracht sind und mit der die Rückhalteeinrichtung im Abgasströmungspfad montierbar ist. Mit Hilfe dieser Tragstruktur wird die Rückhalteeinrichtung einfach handhabbar, was den Aufwand für Montage und Wartung reduziert.

Die Tragstruktur kann entsprechend einer weiteren Ausführungsform unmittelbar an einer Wandung angeordnet sein, die den Abgasströmungspfad quer zur Abgasströmungsrichtung begrenzt. Diese Wandung kann bspw. die Innenwand eines Kamins oder einer Brennkammer sein. Die Tragstruktur kann sich dabei ringförmig zur Erzielung einer einfachen Überdeckung des Abgasströmungspfads mit den Rückhalteelementen erstrecken. Ebenso kann sich die Tragstruktur schraubenförmig zur Erzielung einer mehrfachen Überdeckung des Abgasströmungspfads mit den Rückhalteelementen erstrecken.

Alternativ kann auch vorgesehen sein, die Tragstruktur im montierten Zustand mittels einer geeigneten Aufhängung in einem vertikal verlaufenden Abgasströmungspfad aufzuhängen bzw. abzuhängen. Diese Ausführungsform eignet sich in besonderer Weise für eine Verwendung in einem Kamin der Feuerungsanlage.

Entsprechend einer anderen Ausführungsform kann besagte Aufhängung so ausgestaltet sein, dass die Tragstruktur mit Hilfe der Aufhängung im Abgasströmungspfad höhenverstellbar ist. Insbesondere bei einer Anordnung der Rückhalteeinrichtung in einem Kamin kann mit Hilfe der Abhängung die Positionierung der Tragstruktur von oben, also von einem Austrittsende des Kamins realisiert werden. Dies vereinfacht die Unterbringung der Partikelfiltervorrichtung im Kamin.

Besonders zweckmäßig ist eine Ausführungsform, bei welcher die Tragstruktur mindestens einen Tragring umfasst, von dem mehrere als Borsten ausgestaltete Rückhalteelemente bis zu einer den Abgasströmungspfad quer zur Abgasströmungsrichtung begrenzenden Wandung nach außen abstehen. Durch die höhenverstellbare Abhängung ist es z.B. im Rahmen einer Wartung ohne weiteres möglich, dass beispielsweise ein Schornsteinfeger die jeweilige Rückhalteeinrichtung über die Aufhängung nach oben aus dem Kamin herauszieht und dabei mit Hilfe der Borsten gleichzeitig eine den Abgasströmungspfad einfassende Innenwand des Kamins abbürstet bzw. reinigt.

Zweckmäßig kann vorgesehen sein, dass innen am Tragring mehrere als Lamellen ausgestaltete Rückhalteelemente über die vom Tragring umschlossene Ringfläche verteilt angeordnet sind. Alternativ können innen am Tragring mehrere als Zotteln ausgestaltete Rückhalteelemente angeordnet sein. Gemäß einer weiteren Alternativen können am Tragring mehrere als Lamellen ausgestaltete Rückhalteelemente entlang des Tragrings verteilt angeordnet sein, die distal zu diesem Tragring einen weiteren Tragring tragen, von dem mehrere als Borsten ausgestaltete Rückhalteelemente nach innen abstehen.

Besonders vorteilhaft ist eine Ausführungsform, bei der mittels der Aufhängung mehrere Rückhalteeinrichtungen im Abgasströmungspfad übereinander bzw. hintereinander angeordnet sind. Diese können sich durch unterschiedliche Durchströmungswiderstände und/oder Filtrationsgrade voneinander unterscheiden. Insbesondere kann vorgesehen sein, dass die jeweilige Tragstruktur als zentralen Tragkern auszugestalten, von dem sich als Borsten ausgestaltete Rückhalteelemente nach außen bis zu einer den Abgasströmungspfad quer zur Abgasströmungsrichtung begrenzenden Wandung erstrecken. Der Strömungswiderstand bzw. die Filtrationswirkung der einzelnen Rückhalteeinrichtungen kann beispielsweise durch die Dichte der Rückhalteelemente der einzelnen Rückhalteeinrichtungen in der Abgasströmungsrichtung variiert werden. Die Dichte der Rückhalteelemente kann beispielsweise über die Borstendicke und Borstenanzahl je Flächeneinheit variiert werden.

Bei einer anderen Ausführungsform kann zumindest eine Rütteleinrichtung zum Einleiten von Störungen, z.B. in Form von Schwingungen oder Stößen, in die jeweilige Rückhalteeinrichtung und/oder in die Rückhalteelemente vorgesehen sein. Hierdurch kann eine Abreinigung der Rückhalteelemente periodisch durchgeführt werden. Insbesondere kann vorgesehen sein, dass die Rütteleinrichtung als Klopfeinrichtung oder als Vibrationseinrichtung ausgestaltet ist, um die Störungen zum Reinigen der Rückhalteelemente einzubringen. Des Weiteren kann vorgesehen sein, dass die Rückhalteelemente zumindest teilweise magnetisch anziehbar ausgestaltet sind, wobei dann die Rütteleinrichtung die Störungen zum Abreinigen der Rückhalteelemente mittels elektromagnetischer Kräfte in die Rückhalteelemente einleitet. Eine derartige Ausführungsform arbeitet berührungslos, wodurch es insbesondere möglich ist, die Rütteleinrichtung staubgeschützt unterzubringen.

Gemäß einer anderen Ausführungsform kann eine Ladeeinrichtung zum Erzeugen einer elektrostatischen Aufladung der jeweiligen Rückhalteeinrichtung und/oder der Rückhalteelemente vorgesehen sein. Durch statische Aufladung kann die Anhaftung der im Abgas mitgeführten Partikel an den Rückhalteelementen signifikant verbessert werden.

Gemäß einer bevorzugten Ausführungsform kann die Ladeeinrichtung einen Hochspannungsgenerator aufweisen, der einerseits mit der jeweiligen Rückhalteeinrichtung und/oder mit den Rückhalteelementen und andererseits mit einer Elektrode elektrisch verbunden ist, die im Abgasströmungspfad stromauf der jeweiligen Rückhalteeinrichtung angeordnet ist. Hierdurch lässt sich ein elektrisches Potential zwischen den Rückhalteelementen und der Elektrode aufbauen, das zur Verstärkung der Anziehungskraft genutzt werden kann, welche die Rückhalteelemente auf die im Abgas mitgeführten Partikel ausüben. Besonders zweckmäßig ist eine Ausführungsform, bei welcher die genannte Elektrode als Drallerzeuger ausgestaltet ist. Mit anderen Worten, die Elektrode besitzt eine Geometrie, die bei ihrer Durchströmung den Gasstrom mit einem Drall beaufschlagt. Ein derartiger Drall gibt den im Abgas mitgeführten Partikeln eine quer zur Längsachse des Abgasströmungspfad orientierte Geschwindigkeitskomponente, wodurch die Partikel leichter mit den Rückhalteelementen in Kontakt kommen können.

Entsprechend einer anderen vorteilhaften Ausführungsform kann die Rückhalteeinrichtung eine Stelleinrichtung aufweisen, mit der die Raumlage der Rückhalteelemente zumindest zwischen zwei Stellungen verstellbar ist. Hierdurch können innerhalb der Rückhalteeinrichtung unterschiedliche Betriebszustände realisiert werden, die sich durch unterschiedlich orientierte Rückhalteelemente charakterisieren. Beispielsweise kann die Stelleinrichtung die Rückhalteelemente zumindest zwischen einer Kaltstellung und einer Warmstellung verstellen. Die Kaltstellung nehmen die Rückhalteelemente während einer Kaltstartphase der Feuerungsanlage ein. Im Unterschied dazu nehmen die Rückhalteelemente die Warmstellung während eines Warmbetriebs der Feuerungsanlage ein. Beispielsweise startet die Feuerungsanlage bei Umgebungstemperatur und erreicht ihren Warmbetrieb erst ab 50° C oder erst ab 100° C.

Besonders zweckmäßig ist nun eine Ausführungsform, bei der die Rückhalteeinrichtung in der Kaltstellung der Rückhalteelemente einen kleineren Durchströmungswiderstand aufweist als in der Warmstellung der Rückhalteelemente. Bei dieser Ausführungsform wird berücksichtigt, dass eine Feuerungsanlage, wie z.B. ein Kamin, während der Kaltstartphase nur einen reduzierten ,,Zug" aufweist, der die Abgase durch den Kamin abführt. Während dieser Kaltstartphase ist ein vergleichsweise hoher Durchströmungswiderstand im Kamin nachteilig. Während des Warmbetriebs der Feuerungsanlage hat sich in der Regel ein stabiler, effektiver Zug eingestellt, der die Abgase durch den Kamin abzieht. Während dieses Warmbetriebs kann die Gasströmung ohne Weiteres einen größeren Durchströmungswiderstand überwinden. Mit Hilfe der Stelleinrichtung kann somit die Rückhalteeinrichtung in der Kaltstellung mit dem kleineren Durchströmungswiderstand die Kaltstartphase unterstützen, während sie während des Warmbetriebs ihre volle Filtrationswirkung entfaltet.

Besonders zweckmäßig ist eine Ausführungsform, bei welcher die Rückhalteelemente in ihrer Kaltstellung einen Bypass zur Umgehung der Rückhalteelemente freigeben, der in der Warmstellung der Rückhalteelemente verschlossen ist. Beispielsweise kann ein derartiger Bypass die Rückhalteelemente in Form eines Ringkanals umschließen. Da sich im Bypass keine Rückhalteelemente befinden, besitzt der Bypass einen sehr niedrigen Durchströmungswiderstand. Zwar ist der durchströmbare Querschnitt des Bypasses kleiner als der durchströmbare Querschnitt des Abgasströmungspfads, jedoch ist während der Kaltstartphase der Abgasvolumenstrom deutlich kleiner als während des Warmbetriebs.

Besonders zweckmäßig ist hierbei eine Ausführungsform, bei welcher die Stelleinrichtung fremdenergiefrei arbeitet, also keine externe Energie, insbesondere keine elektrische Energie, benötigt, um die Rückhalteelemente zwischen der Kaltstellung und der Warmstellung zu verstellen. Beispielsweise kann die Stelleinrichtung hierzu wenigstens ein Antriebselement aufweisen, das temperaturabhängig seine Geometrie ändert. Zweckmäßig verwendet die Stelleinrichtung die Geometrieänderung des Antriebselements zum Verstellen der Rückhalteelemente. Beispielsweise kann ein derartiges Antriebselement aus einem Bimetall und aus einem Formgedächtnismetall bzw. Memorymetall bestehen. Das jeweilige Antriebselement lässt sich beispielsweise gezielt so auslegen, dass es in einem der Kaltstartphase zugeordneten Temperaturbereich weitgehend konstant eine erste Form bzw. Geometrie besitzt, während es in einem dem Warmbetrieb zugeordneten zweiten Temperaturbereich weitgehend konstant eine zweite Form bzw. Geometrie besitzt. In einem vergleichweise engen Übergangstemperaturbereich, der den Übergang von der Kaltstartphase zum Warmbetrieb charakterisiert, zeigt das Antriebselement eine vergleichsweise starke Verformung bzw. Geometrieänderung.

Bei einer anderen Ausführungsform kann die Stelleinrichtung eine Schlagkinematik aufweisen, welche die Geometrieänderung des jeweiligen Antriebselements schlagartig in eine Verstellbewegung der Rückhalteelemente umwandelt. Mit Hilfe einer derartigen Schlagkinematik kann die Bewegung zum Verstellen der Rückhalteelemente zwischen deren Kaltstellung und deren Warmstellung gleichzeitig dazu genutzt werden, die Rückhalteelemente von bereits daran angelagerten Partikeln zu reinigen. Denn durch eine schlagartige Verstellbewegung kann sich ein Großteil der an den Rückhalteelementen anhaftenden Partikel lösen und schwerkraftbedingt herabfallen.

Zweckmäßig kann die Schlagkinematik in das jeweilige Antriebselement oder in eine Kopplung zwischen dem jeweiligen Antriebselement und den Rückhalteelementen integriert sein. Beispielsweise kann das jeweilige Antriebselement bzw. die jeweilige Kopplung geometrisch so gestaltet sein, dass die temperaturbedingte Ausdehnung bzw. Schrumpfung des Antriebselements zunächst nur eine mechanisch Spannung innerhalb des Antriebselements bzw. innerhalb der Kopplung erhöht, ohne dass es dabei zu einer wesentlichen Bewegung kommt. Erst ab Überschreiten einer durch die Schlagkinematik bestimmten Vorspannung kommt es dann zu einer schlagartigen Entspannung, die zur gewünschten impulsartigen Bewegung führt.

Bei einer anderen Ausführungsform kann zumindest eine Abstreifeinrichtung im Verstellweg der Rückhalteelemente angeordnet sein, und zwar derart, dass die Rückhalteelemente beim Verstellen von der Kaltstellung in die Warmstellung und/oder beim Verstellen von der Warmstellung in die Kaltstellung an der Abstreifeinrichtung abstreifen. Die jeweilige Abstreifeinrichtung ist zweckmäßig in einem Bereich stationär montiert, in dem die freien Enden der Rückhalteelemente vorbei bewegt werden, wenn diese zwischen der Warmstellung und der Kaltstellung verstellt werden. Mit Hilfe einer derartigen Abstreifeinrichtung kann ebenfalls eine Abreinigung der Rückhalteelemente realisiert werden, und zwar jedes Mal dann, wenn sie zwischen der Kaltstellung und der Warmstellung verstellt werden. Insbesondere lässt sich diese Abstreifeinrichtung auch mit der vorgenannten Schlagkinematik kombinieren, wodurch eine besonders effektive Abreinigung für die Rückhalteelemente realisierbar ist.

Entsprechend einer anderen vorteilhaften Ausführungsform können die Rückhalteelemente metallisch sein. Besonders zweckmäßig ist eine Ausführungsform, bei der die Rückhalteelemente eine katalytisch aktive Beschichtung aufweisen, beispielsweise mittels Edelmetallen, wie z.B. Platin. Durch die katalytisch aktiven Rückhalteelemente können beispielsweise Kohlenmonoxide in Kohlendioxid umgewandelt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 bis 4: stark vereinfachte prinzipielle Längsschnitte durch einen Abgasströmungspfad mit darin angeordneter Partikelfiltervorrichtung, bei verschiedenen Ausführungsformen,
- Fig. 5 und 6: weitere vereinfachte Ausführungsformen der Partikelfiltervorrichtung im Längsschnitt,
- Fig. 7 und 8: vereinfachte Seitenansichten von Rückhalteelementen, die durch Lamellen gebildet sind, bei verschiedenen Ausführungsformen,
- Fig. 9 bis 11: weitere Ausführungsformen der Partikelfiltervorrichtung im Längsschnitt,
- Fig. 12: eine weitere Ausführungsform der Partikelfiltervorrichtung im Längsschnitt in einer Kaltstellung a und in einer Warmstellung b,
- Fig. 13 und 14: weitere Ausführungsformen in einer Kaltstellung a bzw. in einer Warmstellung b,
- Fig. 15: eine weitere Ausführungsform der Partikelfiltervorrichtung.

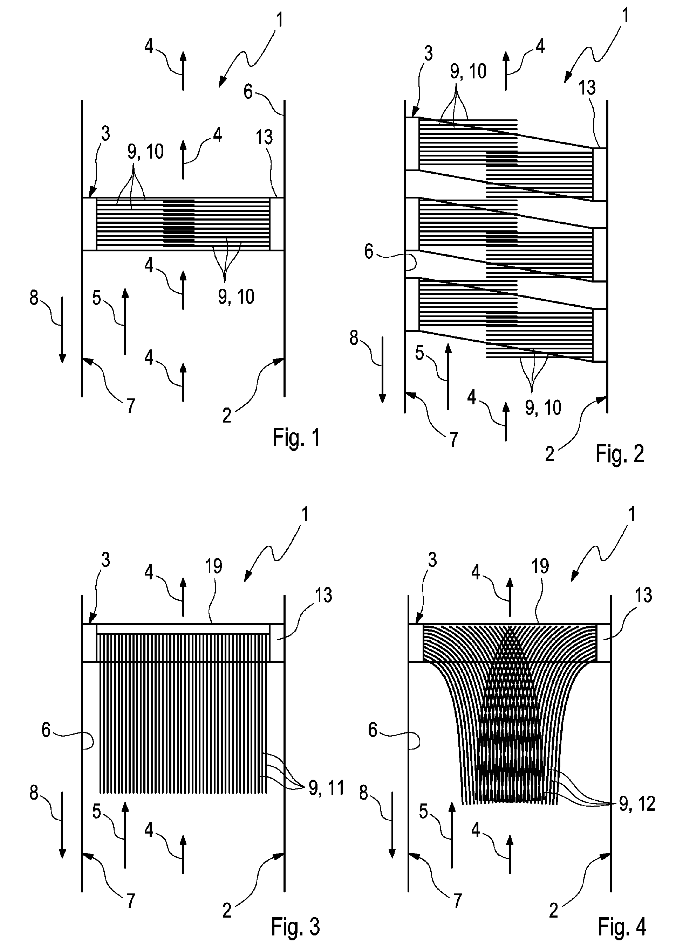

Entsprechend den Fig. 1 bis 15 umfasst eine Partikelfiltervorrichtung 1, mit deren Hilfe Partikel, insbesondere Ruß, aus Abgas einer Feuerungsanlage 2 entfernt werden können, zumindest eine Rückhalteeinrichtung 3. Die Feuerungsanlage 2, bei der es sich insbesondere um eine Hausfeuerungsanlage handeln kann, ist hier nur im Bereich eines Abgasströmungspfads dargestellt, der in den Figuren durch Pfeile 4 angedeutet ist. Der Abgasströmungspfad 4 erstreckt sich dabei in Richtung einer Abgasströmungsrichtung 5, die in den Figuren ebenfalls durch einen Pfeil angedeutet ist. Ferner ist der Abgasströmungspfad 4 quer zur Abgasströmungsrichtung 5 durch eine Wandung 6 begrenzt. Diese Wandung 6 kann bei einer bevorzugten Ausführungsform durch die Innenseite eines Kamins 7 gebildet sein. Ein derartiger Kamin 7 erstreckt sich üblicherweise vertikal, also parallel zu einer durch einen Pfeil angedeuteten Schwerkraftrichtung 8. Im Kamin 7 verläuft die Abgasströmungsrichtung 5 somit wie üblich entgegen der Schwerkraftrichtung 8.

Bei der Feuerungsanlage 2 kann es sich um eine zentrale Feuerungsanlage 2 zum Heizen eines Gebäudes handeln, die üblicherweise in einem Heizungskeller angeordnet ist. Ebenso kann es sich auch um eine einzelne, insbesondere offene Feuerstelle handeln, die in einem Wohnraum, sogenanntes Kaminzimmer, angeordnet ist.

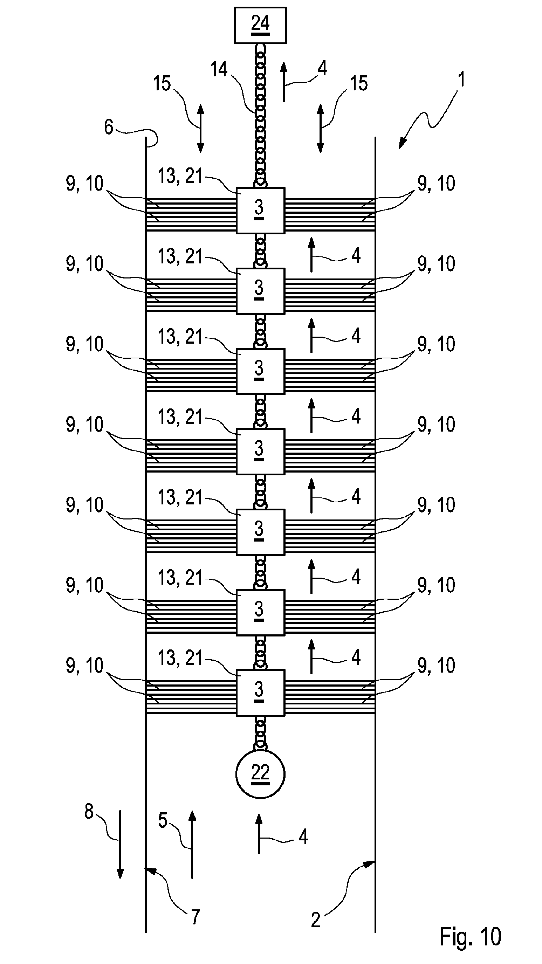

Bei den Ausführungsformen der Fig. 1 bis 6, 9 und 11 bis 15 weist die Partikelfiltervorrichtung 1 jeweils nur eine einzige Rückhalteeinrichtung 3 auf. Im Unterschied dazu zeigt Fig. 10 eine Ausführungsform, bei der die Partikelfiltervorrichtung 1 mehrere Rückhalteeinrichtungen 3 aufweist. Beispielsweise sind dort ohne Beschränkung der Allgemeinheit sieben Rückhalteeinrichtungen 3 vorgesehen.

Die jeweilige Rückhalteeinrichtung 3 ist so ausgestaltet, dass sie im Abgasströmungspfad 4 montiert werden kann, und zwar so, dass die Rückhalteeinrichtung 3 im Betrieb der Feuerungsanlage 2 vom Abgas durchströmt wird. Dementsprechend führt der Abgasströmungspfad 4 durch die Rückhalteeinrichtung 3 hindurch. Die jeweilige Rückhalteeinrichtung 3 weist mehrere Rückhalteelemente 9 auf. Diese Rückhalteelemente 9 sind relativ zueinander beweglich angeordnet. Im montierten Zustand der Rückhalteeinrichtung 3 sind diese Rückhalteelemente 9 außerdem im Abgasströmungspfad 4 angeordnet. Die Rückhalteelemente 9 sind im wesentlichen für das Abgas nicht durchströmbar, können aber im Sonderfall eine mikroporöse Struktur aufweisen. Ihre Anordnung im Abgasströmungspfad 4 erfolgt so, dass sie im Betrieb der Feuerungsanlage 2 bei der Durchströmung der Rückhalteeinrichtung 3 vom Abgas umströmt werden.

Entsprechend den Fig. 1, 2, 14 und 15 können alle Rückhalteelemente 9 durch Borsten 10 gebildet sein. Die jeweiligen Borsten 10 erstrecken sich im montierten Zustand der Rückhalteeinrichtung 3 quer zur Abgasströmungsrichtung 5. In den Beispielen der Fig. 1 und 10 erstrecken sich die Borsten 10 jeweils radial von außen nach innen, insbesondere derart, dass sie jeweils im Bereich eines Zentrums des Abgasströmungspfads 4 bzw. des Kamins 7 freistehend enden. Dabei können sie sich an ihren freien Enden gegenseitig berühren oder auch geringfügig in radialer Richtung überlappen. Ebenso ist es möglich, die einzelnen Borsten 10 so lang auszugestalten, dass sie sich bis nahe an den gegenüberliegenden Abschnitt er Wandung 6 erstrecken. In der Folge überlappen sich die Borsten 10 in der Abgasströmungsrichtung 5.

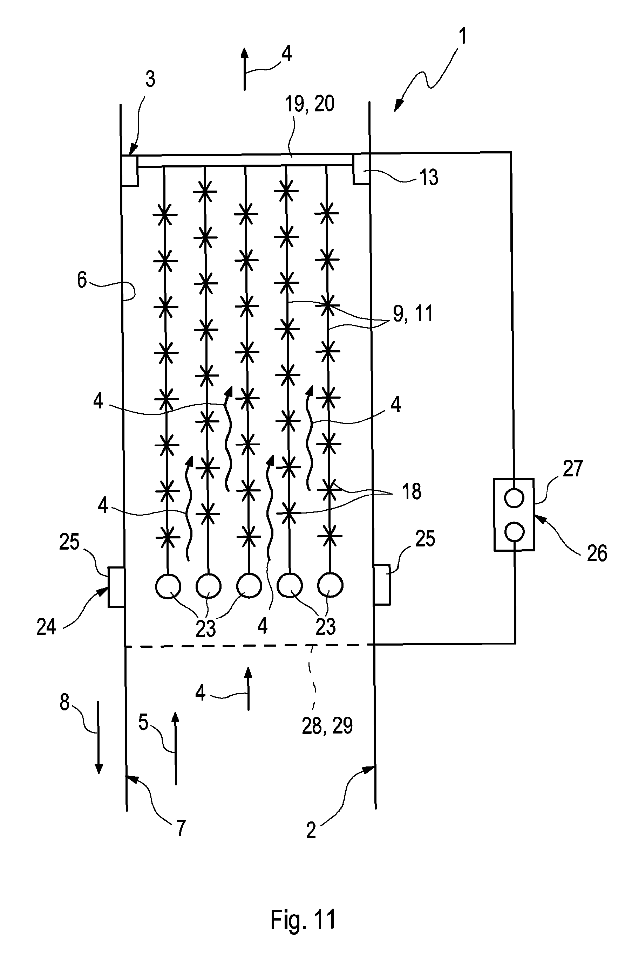

Entsprechend den Fig. 3 und 11 können alle Rückhalteelemente 9 durch Lamellen 11 gebildet sein. Diese Lamellen 11 erstrecken sich dabei im Wesentlichen parallel zur Abgasströmungsrichtung 5.

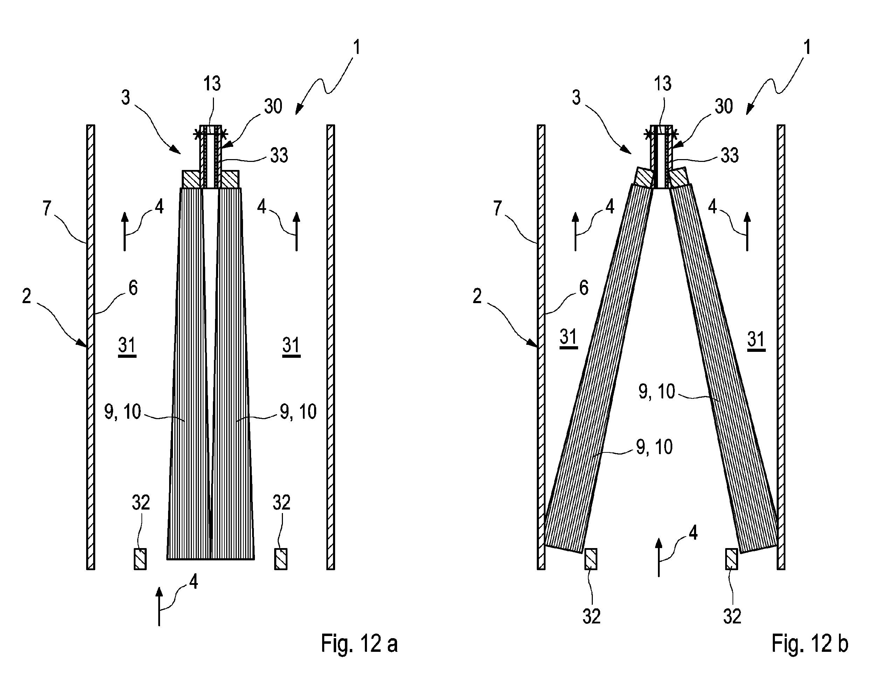

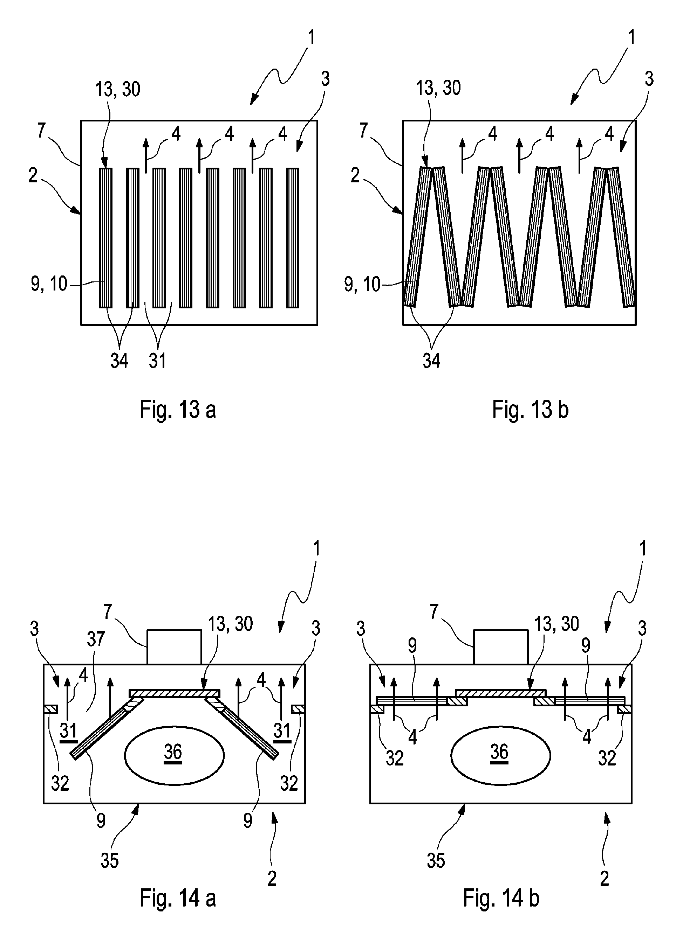

Die Fig. 12 und 13 zeigen Rückhalteelemente 9, die zwar ebenfalls durch Borsten 10 gebildet sind, die sich jedoch nicht quer zur Abgasströmungsrichtung 5 erstrecken, sondern im Wesentlichen parallel zur Abgasströmungsrichtung 5, also eher wie die zuvor genannten Lamellen 11. Die Borsten 10 zeichnen sich gegenüber den Lamellen 11 durch eine höhere Steifigkeit aus.

Fig. 4 zeigt eine weitere Ausführungsform, bei der alle Rückhalteelemente 9 durch Zotteln 12 gebildet sind. Diese Zotteln 12 erstrecken sich dabei im montierten Zustand der Rückhalteeinrichtung 3 einenends, hier mit ihrem oberen Ende, im Wesentlichen quer zur Abgasströmungsrichtung 5, während sie sich anderenends, hier mit ihrem unteren Ende, im Wesentlichen parallel zur Abgasströmungsrichtung 5 erstrecken.

Die Borsten 10 sind vergleichsweise biegesteif. Insbesondere sind sie so steif, dass sie bei horizontaler Ausrichtung, also bei einer Orientierung quer zur Schwerkraftrichtung 8 durch ihre eigene Gewichtskraft nicht oder nur unwesentlich umgebogen werden. Die Borsten 10 können aus Kunststoff hergestellt sein und bspw. einen Querschnitt von 0,1- 1 mm besitzen. Die Biegesteifigkeit wird durch das Längen/Durchmesserverhältnis bestimmt. Im Unterschied dazu sind die Zotteln 12 biegeweich ausgestaltet, insbesondere soweit, dass sie aufgrund ihrer eigenen Gewichtskraft von der horizontalen Ausrichtung an ihrem oberen Ende ausgehend herabhängen, so dass sie an ihrem unteren Ende weitgehend vertikal orientiert sind. Die Zotteln 12 können zweckmäßig aus Kunststoff hergestellt sein. Sie können bandförmig oder fadenförmig ausgestaltet sein. Ihr Querschnitt ist bevorzugt kleiner als 1 mm.

Die Lamellen 11 können biegesteif sein wie die Borsten 10. Sie können auch biegeweich ausgestaltet sein wie die Zotteln 12. Sie können ebenfalls fadenförmig oder bandförmig oder auch kettenförmig, also mehrgliedrig, gestaltet sein.

Entsprechend den hier gezeigten Ausführungsformen ist die Rückhalteeinrichtung 3 so ausgestaltet, dass sie sich für eine Montage im Kamin 7 der Feuerungsanlage 2 eignet, wobei dieser Kamin 7 und somit auch der darin verlaufende Abgasströmungspfad 4 parallel zur Schwerkraftrichtung 8 orientiert ist.

Bei den hier gezeigten Ausführungsformen weist die Rückhalteeinrichtung 3 eine Tragstruktur 13 auf. An dieser Tragstruktur 13 sind die Rückhalteelemente 9 angebracht. Mit Hilfe der Tragstruktur 13 ist die Rückhalteeinrichtung 3 im Abgasströmungspfad 5 montierbar. Hierzu kann die Tragstruktur 13 wie bei den Ausführungsformen der Fig. 1 bis 4 im montierten Zustand unmittelbar an der Wandung 6 angeordnet sein. Beispielsweise kann die Tragstruktur 13 mit einer entsprechenden, hier nicht gezeigten Aufhängung, die an der Wandung 6 befestigt ist, an der Wandung 6 montiert werden. Ebenso kann die Tragstruktur 13 selbst fest mit der Wandung 6 verbunden werden, z. Bsp. mit Hilfe von Schrauben. Ebenso kann die Tragstruktur 13 mit der Wandung 6 verklebt werden. Ferner ist es möglich, die Tragstruktur 13 so auszugestalten, dass sie an der Wandung 6 durch Klemmkraft gehalten ist.

Bei den Ausführungsformen der Fig. 1, 3, 4 und 11 ist die Tragstruktur 13 ringförmig ausgestaltet. Im Unterschied dazu ist sie bei der in Fig. 2 gezeigten Ausführungsform schraubenförmig ausgestaltet.

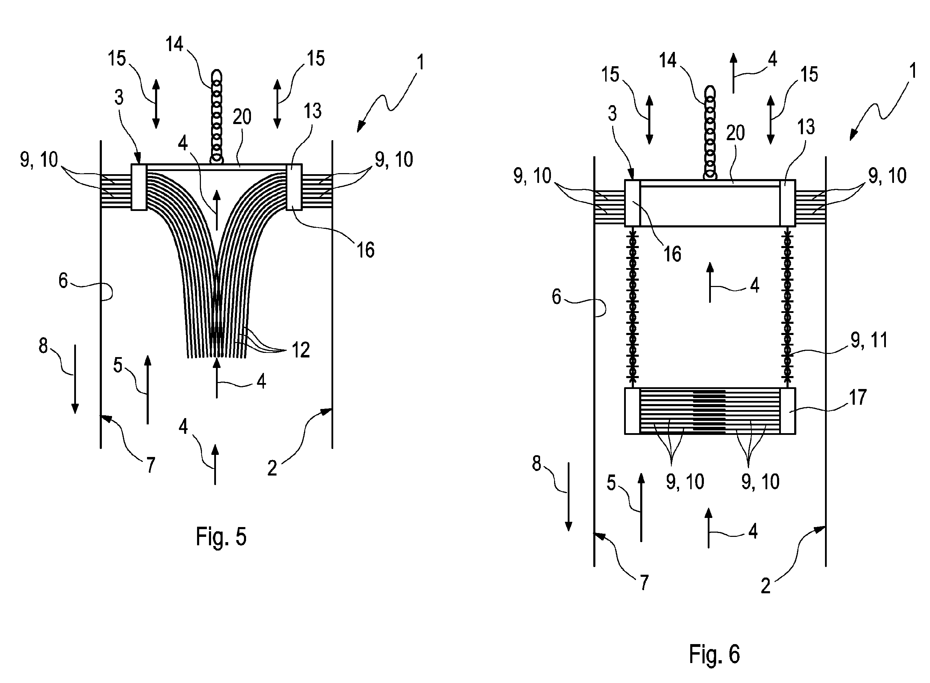

Die Fig. 5, 6 und 9, 10 zeigen Ausführungsformen, bei denen die Partikelfiltervorrichtung 1 außerdem eine Aufhängung 14 aufweist, mit deren Hilfe die Tragstruktur 13 im Abgasströmungspfad 5 aufgehängt ist. Dies ist insbesondere dann möglich, wenn sich der Abgasströmungspfad 4 vertikal erstreckt, was insbesondere bei einem Kamin 7 der Fall ist. Besonders vorteilhaft kann diese Aufhängung 14 so ausgestaltet sein, dass es möglich ist, die Tragstruktur 13 mit Hilfe der Aufhängung 14 im vertikalen Abgasströmungspfad 4 bzw. im Kamin 7 in der Höhe zu verstellen. Eine derartige Höhenverstellbarkeit ist in den Fig. 5, 6 und 9, 10 durch Doppelpfeile 15 angedeutet.

Bei den Ausführungsformen der Fig. 5, 6 und 9, 10 umfasst die Tragstruktur 13 zumindest einen Tragring 16, der sich bezüglich der Hauptströmungsrichtung 5 in Umfangsrichtung geschlossen erstreckt. Von diesem Tragring 16 stehen mehrere als Borsten 10 ausgestaltete Rückhalteelemente 9 nach außen ab. Dabei stehen diese Borsten 10 bis zur Wandung 6 vom Tragring 16 ab. Hierdurch bewirken diese Borsten 10 eine Zentrierung des Tragrings 16 und somit der Tragstruktur 13 bezüglich des Abgasströmungspfads 4 bzw. bezüglich des Kamins 7. Desweiteren können diese Borsten 10 in Verbindung mit der Höhenverstellbarkeit 15 zum Reinigen der Wandung 6 genutzt werden. Beim Höhenverstellen der Tragstruktur 13 wirkt die ringförmige Anordnung der nach außen abstehenden Borsten 10 wie eine Bürste, wodurch die Wandung 6 gebürstet und von daran angelagerten Verunreinigungen abgereinigt werden kann.

Bei der in Fig. 5 gezeigten Ausführungsform sind am Tragring 16 radial innen mehrere als Zotteln 12 ausgestaltete Rückhalteelemente 9 angeordnet.

Bei der in Fig. 6 gezeigten Ausführungsform sind am Tragring 16 mehrere als Lamellen 11 ausgestaltete Rückhalteelemente 9 angeordnet, und zwar an einer Unterseite des Tragrings 16. Sie erstrecken sich dadurch ringförmig entsprechend dem Profil des Tragrings 16. Die Lamellen 11 bilden dadurch einen ringförmigen oder zylindrischen Vorhang. Bei der in Fig. 6 gezeigten Ausführungsform ist an den Lamellen 11 distal zum oberen Tragring 16 ein weiterer oder unterer Tragring 17 angeordnet. Dieser untere Tragring 17 weist seinerseits innen mehrere als Borsten 10 ausgestaltete Rückhalteelemente 9 auf, die nach innen abstehen. Der untere Tragring 17 kann grundsätzlich gleich dimensioniert sein wie der obere Tragring 16. Er kann jedoch auch einen kleineren oder einen größeren Durchmesser als der obere Tragring 16 besitzen. Der untere Tragring 17 dient zum Strecken oder Ausrichten der Lamellen 11.

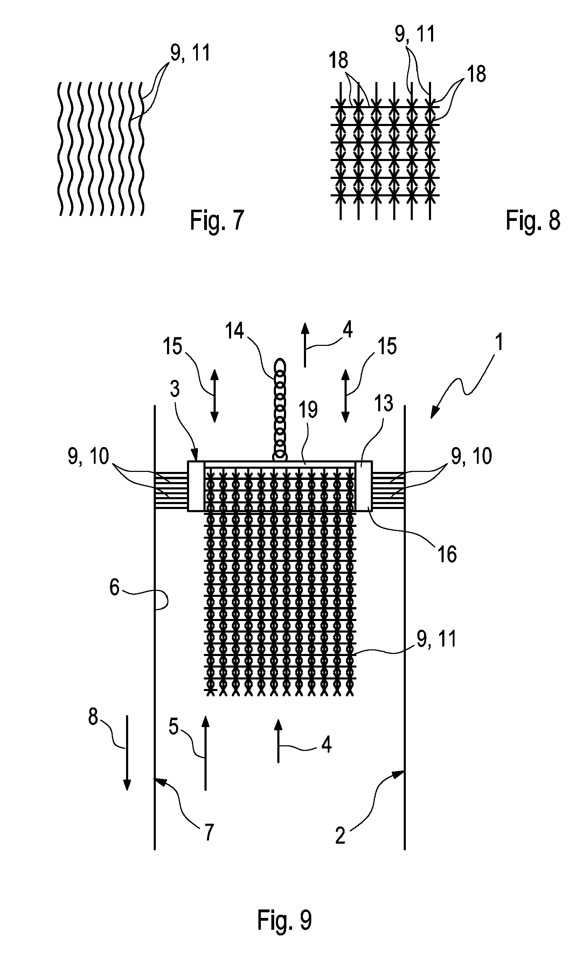

Die Lamellen 11 können gemäß Fig. 7 relativ zueinander unabhängig sein, so dass sie sich relativ zueinander frei bewegen können. Entsprechend den Fig. 8 und 11 ist es jedoch ebenso möglich, die Lamellen 11 so auszugestalten, dass zumindest benachbarte Lamellen 11 miteinander verbunden sind oder miteinander zusammenwirken. Dies kann durch eine Vielzahl von quer zur Längsrichtung der Lamellen 11 abstehenden Fasern 18 realisiert werden, die ähnlich wie Kletten wirken und benachbarte Lamellen 11 aneinander anhaften lassen bzw. miteinander verbinden. Diese Fasern 18 können dabei zusätzlich die zur Anlagerung der Partikel bereitgestellte Oberfläche signifikant vergrößern.

Entsprechend den Fig. 9 und 11 können die als Lamellen 11 ausgestalteten Rückhalteelemente 9 innen am Tragring 16 bzw. an der Tragstruktur 13 auch flächig angeordnet sein. Insbesondere können sie über die gesamte vom Tragring 16 bzw. von der Tragstruktur 13 umschlossene Ringfläche verteilt angeordnet sein. Eine entsprechende, flächige Anordnung ist auch bei der in Fig. 3 gezeigten Ausführungsform vorgesehen. Um die Lamellen 11 flächig an der jeweiligen Tragstruktur 13 anordnen zu können, kann diese mit einem Gitter 19 ausgestattet sein, an dem die Lamellen 11 angebracht sind und sich davon ausgehend nach unten erstrecken. Die Lamellen 11 sind am Gitter 19 freihängend angebracht. Das Gitter 19 kann außerdem dazu verwendet werden, die Aufhängung 14 mit der Tragstruktur 13 zu verbinden. Die Lamellen 11 können aber auch auf einer spiralförmigen Tragstruktur 13 angeordnet sein.

Bei der in Fig. 11 gezeigten Ausführungsform ist an den Lamellen 11 an dem von der Tragstruktur 13 entfernten unten hängenden Ende jeweils ein Gewicht 23 angebracht, um die Lamellen 11 zu straffen. Sofern das Gewicht 23 aus Metall hergestellt ist, kann es mit einer Beschichtung versehen sein, z.B. als Korrosionsschutz.

Sofern kein Gitter 19 zum Aufhängen von Lamellen 11 erforderlich ist, kann zum Verbinden der Aufhängung 14 mit der Tragstruktur 13 entsprechend den Fig. 5 und 6 ein Verbindungselement 20 verwendet werden, das einerseits fest mit der Tragstruktur 13 verbunden ist und an dem andererseits die Aufhängung 14 angebracht werden kann. Das Verbindungselement 20 kann durch eine einzelne Strebe oder durch mehrere, sich sternförmig erstreckende Streben gebildet sein. Ebenso kann das Verbindungselement 20 als Gitter ausgestaltet sein.

Fig. 5 zeigt somit eine Ausführungsform, bei der einige Rückhalteelemente 9 als Borsten 10 ausgestaltet sind, während andere Rückhalteelemente 9 als Zotteln 12 ausgestaltet sind. Dementsprechend zeigen auch die Fig. 6 und 9 Ausführungsformen, bei denen einige Rückhalteelemente 9 als Borsten 10 ausgestaltet sind, während die anderen Rückhalteelemente 9 als Lamellen 11 ausgestaltet sind.

Bei der in Fig. 10 gezeigten Ausführungsform sind mehrere Rückhalteeinrichtungen 3 vorgesehen, die mit Hilfe der gemeinsamen Aufhängung 14 im Kamin 7 übereinander angeordnet sind. Sie besitzen jeweils eine Tragstruktur 13, die bei diesen Ausführungsformen bspw. jeweils als zentraler Tragkern 21 ausgestaltet sind. Von dem jeweiligen Tragkern 21 erstrecken sich wieder als Borsten 10 ausgestaltete Rückhalteelemente 9 nach außen, und zwar insbesondere wieder bis zur Wandung 6. Hierdurch ermöglichen auch die Tragkerne 21 eine Zentrierung der jeweiligen Rückhalteeinrichtung 3 im Kamin 7. Die Tragkerne 21 sind auf geeignete Weise fest mit der Aufhängung 14 verbunden, wobei die Aufhängung 14 insbesondere durch die Tragkerne 21 zentral hindurch geführt sein kann.

Grundsätzlich können alle Rückhalteeinrichtungen 3 dieser Partikelfiltervorrichtung 1 baugleich sein. Bei einer besonderen Ausführungsform ist es jedoch möglich, die Rückhalteeinrichtungen 3 unterschiedlich auszugestalten, so dass die Anordnung der mehreren Rückhalteeinrichtungen 3 zumindest zwei verschiedene Rückhalteeinrichtungen 3 umfasst. Beispielsweise können die verschiedenen Rückhalteeinrichtungen 3 sich dadurch voneinander unterscheiden, dass bei ihnen die Rückhalteelemente 9, also hier vorzugsweise die Borsten 10 mit unterschiedlicher Dichte angeordnet sind. Beispielsweise kann die Dichte der Rückhalteelemente 9 in der Abgasströmungsrichtung 5 zunehmen oder abnehmen. Die Dichte der Rückhalteelemente 9 ergibt sich bspw. durch die Anzahl der Borsten 10 pro Flächeneinheit und/oder durch die Gesamtzahl der Borsten 10 und/oder durch die Dicke der Borsten 10.

Bei der in Fig. 10 gezeigten Ausführungsform ist außerdem ein Gewicht 22 vorgesehen, das unten an der Aufhängung 14 oder an der untersten Rückhalteeinrichtung 3 angeordnet ist, um die Aufhängung 14 bzw. die gesamte Anordnung der Rückhalteeinrichtungen 3 zu straffen.

Wie bereits erwähnt, bestehen die Rückhalteelemente 9 zweckmäßig aus Kunststoff. Alternativ sind auch Rückhalteelemente 9 aus Metall möglich. Die Rückhalteelemente 9 sind relativ zueinander beweglich. Die Borsten 10 sind zweckmäßig flexibel, insbesondere dann, wenn sie zum Bürsten der Wandung 6 verwendet werden können. Im Übrigen können die Borsten 10 drahtförmig oder stabförmig gestaltet sein. Im Unterschied dazu sind die Zotteln 12 bandförmig oder schnurförmig und deutlich flexibler als die Borsten 10. Die Lamellen 11 können wie die Borsten 10 oder wie die Zotteln 12 konfiguriert sein, sie können jedoch auch kettenförmig gestaltet sein.

Die jeweilige Rückhalteeinrichtung 3 bildet im Strömungspfad 4 der jeweiligen Feuerungsanlage 2 ein vom Abgas umströmbares bzw. durchströmbares Hindernis, das an den einzelnen Rückhalteelementen 9 eine vergleichsweise große Oberfläche zur Verfügung stellt, an denen sich im Abgas mitgeführte Partikel ablagern bzw. anlagern können. Die Rückhalteeinrichtung 3 wirkt dabei wie ein Adsorber für mitgeführte Partikel, insbesondere Ruß.

Da sich die einzelnen Rückhalteelemente 9 relativ zueinander bewegen können, ergibt sich eine selbstreinigende Wirkung. Durch gegenseitige Berührung bzw. durch Kontaktieren mit der Wandung 6 können sich die angelagerten Partikel von den Rückhalteelemente 9 lösen und in der Schwerkraftrichtung 8, also nach unten abfallen. Derartige Relativbewegungen der Rückhalteelemente 9 zueinander und zur Wandung 6 können dabei durch die Abgasströmung selbst erzeugt werden. Zusätzlich oder alternativ ist es ebenso möglich, eine Rütteleinrichtung 24 vorzusehen, wie sie beispielsweise bei den Ausführungsformen der Fig. 10 und 11 angedeutet ist. Die Rütteleinrichtung 24 kann dabei die einzelnen Rückhalteelemente 9 bzw. die jeweilige Rückhalteeinrichtung 3 beispielsweise zu longitudinalen und/oder zu transversalen Schwingungen anregen.

Eine derartige Rütteleinrichtung 24 kann gemäß Fig. 10 beispielsweise als Klopfeinrichtung oder als Vibrationseinrichtung ausgestaltet sein, die z.B. über die Aufhängung 14 entsprechende Störungen, z.B. Störkräfte und/oder Störbewegungen in die Rückhalteeinrichtung 3 und somit in die Rückhalteelemente 9 einleiten kann.

Bei der in Fig. 11 gezeigten Ausführungsform weist die Rütteleinrichtung 24 zumindest einen Elektromagneten 25 auf, der außen am Kamin 2 oder an der Wandung 6 des Kamins 2 angeordnet sein kann. Im Beispiel der Fig. 11 ist der jeweilige Elektromagnet 25 in die Wandung 6 eingelassen. Bei dieser Ausführungsform regt die Rütteleinrichtung 24 die einzelnen Rückhalteelemente 9 mit Hilfe elektromagnetischer Wellen zu Schwingungen und somit zum Abschütteln der Rußablagerungen an. Hierzu können die einzelnen Rückhalteelemente 9 aus einem magnetisch anziehbaren Material, z.B. aus einem ferromagnetischen Material, insbesondere aus Weicheisen, hergestellt sein. Im Beispiel der Fig. 11 wirkt die Rütteleinrichtung 24 mit den Gewichten 23 zusammen, die dementsprechend z.B. aus Eisen bestehen. Durch eine entsprechende, beispielsweise gepulste, Bestromung der Elektromagnete 25 lassen sich die Gewichte 23 zu Schwingungsbewegungen anregen, welche die damit verbundenen Lamellen 11 schütteln bzw. rütteln.

Um die weiter oben beschriebene Adsorptionswirkung der der Rückhalteeinrichtung 3 bzw. der Rückhalteelemente 9 zu verbessern, ist es beispielsweise möglich, die Rückhalteeinrichtung 3 bzw. deren Rückhalteelemente 9 elektrostatisch aufzuladen. Hierzu kann eine entsprechende Ladeeinrichtung 26 vorgesehen sein, die rein exemplarisch in Fig. 11 eingetragen ist. Es ist klar, dass eine derartige Ladeeinrichtung 26 auch bei den anderen gezeigten Ausführungsformen oder weiteren Ausführungsformen der Filtervorrichtung 1 vorgesehen sein kann. Die Ladeeinrichtung 26 umfasst beispielsweise einen Hochspannungsgenerator 27, der einerseits mit der jeweiligen Rückhalteeinrichtung 3, z.B. über die Tragstruktur 13 oder über das Gitter 19 oder über das Verbindungselement 20, elektrisch verbunden ist, während er andererseits mit einer Elektrode 28 elektrisch verbunden ist, die bezüglich der Abgasströmungsrichtung 5 stromauf der Rückhalteeinrichtung 3 im Abgasströmungspfad 4 angeordnet ist. Beispielsweise kann die Elektrode 28 als Drahtgitter ausgestaltet sein oder durch eine andere, mit geringem Strömungswiderstand durchströmbare Struktur gebildet sein. Durch eine elektrostatische Aufladung kommt es quasi zu einer ,,Saugwirkung" an den Oberflächen der Rückhalteelemente 9, welche die im Abgas mitgeführten Partikel stark anzieht und anhaften lässt.

Bei einer mehrstufigen Ausgestaltung, wie sie z.B. in Fig. 10 wiedergegeben ist, kann vorgesehen sein, nur eine einzige Rückhalteeinrichtung 3 oder mehrere Rückhalteeinrichtungen 3 elektrostatisch aufzuladen, wobei verschiedene Rückhalteeinrichtungen 3 dann auch unterschiedlich stark elektrostatisch aufgeladen werden können.

Anstelle einer elektrostatischen Aufladung mittels einer Aufladeeinrichtung 26 ist es grundsätzlich auch möglich, die Aufladung der Rückhalteelemente 9 durch Strömungs-Reibungs-Elektrizität zu erzeugen. Eine derartige Aufladung durch Strömungs-Reibungs-Elektrizität kann beispielsweise dadurch erzeugt werden, dass Quarzstrukturen bzw. Kunststoffstrukturen umströmt werden. Dementsprechend kann eine derartige Aufladung mittels Strömungs-Reibungs-Elektrizität durch eine entsprechende Materialauswahl für die Rückhalteelemente 9 realisiert werden.

Darüber hinaus kann die Abscheidewirkung der hier vorgestellten Filtervorrichtung 1 dadurch verbessert werden, dass stromauf und/oder innerhalb der Filtereinrichtung 1 eine gezielte Strömungsablenkung bzw. Strömungsumlenkung erzeugt wird, beispielsweise um die einzelnen Rückhaltelemente 9 quer zur Führungsrichtung des Abgaspfads 4 mit dem Abgas anzuströmen. Darüber hinaus kann noch eine Zyklonwirkung zur Verbesserung der Partikelabscheidung genutzt werden, sofern im Abgaspfad 4 eine Drallströmung erzeugt wird. Beispielsweise kann stromauf der jeweiligen Rückhalteeinrichtung 3 im Strömungspfad 4 ein entsprechender in Fig. 11 stark vereinfacht dargestellter Drallerzeuger 29 angeordnet sein. Im Beispiel kann der Drallerzeuger 29 metallisch ausgestaltet sein und gleichzeitig als Elektrode 28 der Ladeeinrichtung 26 verwendet werden.

Die Partikelfiltervorrichtung 1 kann neben ihrer Filtrationswirkung für im Abgas mitgeführte Partikel außerdem mit einer chemischen Abgasreinigungswirkung ausgestattet sein. Hierzu ist es möglich, zumindest einige der Rückhalteelemente 9 mit einer katalytisch aktiven Beschichtung zu versehen. Beispielsweise können die Rückhalteelemente 9 aus Metall hergestellt sein und katalytisch aktiv beschichtet sein, wobei eine Edelmetallbeschichtung, insbesondere mit Platin, bevorzugt ist. Durch diese Maßnahme kann die Schadstoffemission der Feuerungsanlage 2 reduziert werden.

Entsprechend den Fig. 12 bis 15 kann die Rückhalteeinrichtung 3 eine Stelleinrichtung 30 aufweisen, die beispielsweise in die Tragstruktur 13 integriert sein kann. Die Stelleinrichtung 30 ermöglicht eine Verstellung der Raumlage der Rückhalteelemente 9, und zwar zumindest zwischen zwei Stellungen. Zweckmäßig verstellt die Stelleinrichtung 30 dabei die Rückhalteelemente 9 zumindest zwischen einer in den Fig. 12a, 13a, 14a wiedergegebenen Kaltstellung und einer in den Fig. 12b, 13b und 14b wiedergegebenen Warmstellung. Die Kaltstellung nehmen die Rückhalteelemente 9 während einer Kaltstartphase der Feuerungsanlage 2 ein. Die Warmstellung nehmen die Rückhalteelemente 9 während eines Warmbetriebs der Feuerungsanlage 2 ein. Während der Kaltstartphase ist eine Zugwirkung des Kamins 7 vergleichsweise gering. Dementsprechend ist die Kaltstellung der Rückhalteelemente 9 zweckmäßig so gewählt, dass die Rückhalteeinrichtung 3 dann einen vergleichsweise kleinen Durchströmungswiderstand aufweist. Insbesondere geben die Rückhalteelemente 9 in ihrer Kaltstellung einen Bypass 31 frei, der die Rückhalteelemente 9 umgeht und der in der Warmstellung der Rückhalteelemente 9 durch die Rückhalteelemente 9 weitgehend verschlossen ist.

Bei der in Fig. 12 gezeigten Ausführungsform ist der Bypass 31 als Ringkanal ausgestaltet. Die Rückhalteelemente 9 sind bei dieser Ausführungsform in der Kaltstellung im Wesentlichen zylindrisch angeordnet, und zwar konzentrisch innerhalb des Kamins 7. Die langen Borsten 10, die auch steife Lamellen 11 sein können, hängen dabei vertikal nach unten. In der Warmstellung sind die Rückhaltelemente 9 so verstellt, dass sie kegelförmig angeordnet sind und sich nach unten soweit nach außen ausdehnen, bis sie die Wandung 6 des Kamins 7 berühren.

Innerhalb des Kamins 7 kann gemäß Fig. 12 außerdem eine Abstreifeinrichtung 32 im Verstellweg der Rückhalteelemente 9 angeordnet sein. Diese Abstreifeinrichtung 32 ist stationär und dabei so positioniert, dass die Rückhalteelemente 9, zweckmäßig im Bereich ihrer freien Enden, beim Verstellen von der Kaltstellung in die Warmstellung bzw. beim Verstellen von der Warmstellung in die Kaltstellung daran abstreifen, wodurch an den Rückhalteelementen 9 angelagerte Partikel abgeschüttelt werden. Die Abstreifeinrichtung 32 ist dabei stationär angeordnet und arbeitet passiv.

Zur Realisierung der vorgenannten Stelleinrichtung 30 kann grundsätzlich ein elektromotorischer Antrieb oder dergleichen vorgesehen sein. Bevorzugt wird jedoch eine Stelleinrichtung 30, die ohne Fremdenergie auskommt. Zweckmäßig kann die Stelleinrichtung 30 hierzu mit wenigstens einem Antriebselement 33 ausgestattet sein, das temperaturabhängig seine Geometrie ändert. Beispielsweise kann es sich beim Antriebselement 33 um einen Körper aus einem Bimetall oder aus einem Formgedächtnismetall bzw. Memorymetall handeln. Die Stelleinrichtung 30 verwendet nun die Geometrieänderung des jeweiligen Antriebselements 33 zum Verstellen der Rückhalteelemente 9. Während des Kaltbetriebs besitzt das jeweilige Antriebelement 33 eine erste Geometrie oder Kaltgeometrie, die zur Kaltstellung der Rückhalteelemente 9 führt. Während des Warmbetriebs nimmt das jeweilige Antriebselement 33 eine zweite Geometrie oder Warmgeometrie ein, die zur Warmstellung der Rückhalteelemente 9 führt. In einem bestimmten Übergangstemperaturbereich erfolgt die temperaturabhängige Formänderung bzw. Geometrieänderung des jeweiligen Antriebselements 33, was zur gewünschten Verstellung der Rückhalteelemente 9 zwischen der Kaltstellung und der Warmstellung führt.

Fig. 13 zeigt eine andere Anordnung der Rückhaltelemente 9. Beispielsweise können gemäß Fig. 13 die Rückhaltelemente 9, zweckmäßig Borsten 10 oder Lamellen 11 über die jeweilige Tragstruktur 13 in Verbindung mit der Stelleinrichtung 30 in Form von Bündeln zueinander paralleler Rückhaltelemente 9 zusammengefasst sein, die im Querschnitt des Strömungspfads 4 nebeneinander angeordnet sind. In der Kaltstellung gemäß Fig. 13a sind besagte Bündel 34, die jeweils mehrere parallele Rückhaltelemente 9 umfassen, parallel zueinander orientiert, wobei sie zwischen sich Zwischenräume freigeben, die den Bypass 31 bilden. Im Unterschied dazu bewirkt die Stelleinrichtung 30 eine Warmstellung, in welcher benachbarte Bündel 34 geneigt zueinander verlaufen, wodurch die zuvor genannten Zwischenräume, die den Bypass 31 bilden, verschlossen werden. Es ist klar, dass auch hier zumindest eine Abstreifvorrichtung 32 vorgesehen sein kann.

Bei der in Fig. 14 gezeigten Ausführungsform ist die Partikelfiltereinrichtung 1 bzw. die jeweilige Rückhalteeinrichtung 3 in einer Brennkammer 35 der Feuerungsanlage 2 angeordnet, an welche der Kamin 7 anschließt. Die jeweilige Rückhalteeinrichtung 3 befindet sich dabei Stromab einer Brennzone 36 und im Beispiel stromauf des Kamins 7. Ebenso ist es möglich, die jeweilige Rückhalteeinrichtung 3 unmittelbar am Übergang zwischen Brennkammer 35 und Kamin 7 anzuordnen.

Bei der in Fig. 14 gezeigten Ausführungsform sind entweder mehrere Rückhalteeinrichtungen 13 ringförmig entlang einer ringförmigen Durchlassöffnung 37 verteilt angeordnet oder eine einzige Rückhalteeinrichtung 3 ist ringförmig ausgestaltet und entlang der ringförmigen Durchlassöffnung 37 angeordnet. Bei der in Fig. 14a gezeigten Kaltstellung geben die Rückhalteelemente 9 der jeweiligen Rückhalteeinrichtung 3 den Bypass 31 zur Durchlassöffnung 37 frei bzw. öffnen die Rückhalteelemente 9 die Durchlassöffnung 37, so dass die Durchlassöffnung 37 den Bypass 31 bildet. In der Warmstellung gemäß Fig. 14b verschließen die Rückhaltelemente 9 die Durchlassöffnung 37 bzw. den Bypass 31, so dass die Abgasströmung 4 die jeweilige Rückhalteeinrichtung 3 durchströmen muss. Im Beispiel der Fig. 14 ist außerdem wieder eine Abstreifeinrichtung 32 dargestellt, an der die Rückhalteelemente 9 abstreifen, wenn sie von der Kaltstellung in die Warmstellung oder zurückverstellt werden.

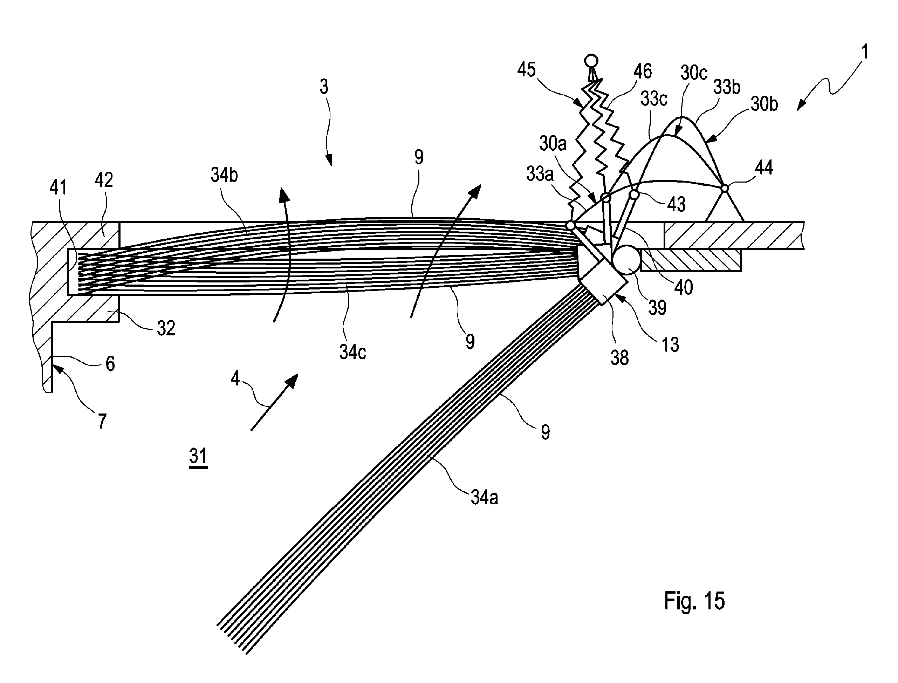

Fig. 15 zeigt eine weitere Ausführungsform zur Realisierung einer Rückhalteeinrichtung 3 mit verstellbaren Rückhaltelementen 9. Dabei sind in Fig. 15 gleichzeitig drei unterschiedliche Zustände bzw. Stellungen für die Rückhalteelemente 9 wiedergegeben. Das gezeigte Bündel 34 der Rückhalteelemente 9 ist in der Kaltstellung mit 34a, in der Warmstellung mit 34b und in einer Zwischenstellung mit 34c bezeichnet. Die Tragstruktur 13 umfasst hier eine Halterung 38, die in einem Schwenklager 39 relativ zur Wandung 6 des Kamins 7 schwenkverstellbar gelagert ist. Über einen Stellhebel 40 ist die Halterung 38 mit der Stelleinrichtung 30 gekoppelt, die hier vereinfacht durch das Antriebselement 33 gebildet ist. Gemäß den drei Stellungen der Rückhalteelemente 9 sind auch für die Stelleinrichtung 30 sowie für das Antriebselement 33 drei Zustände dargestellt, die korrespondierend mit 30a, 30b, 30c bzw. 33a, 33b, 33c bezeichnet sind.

Gegenüber dem Lager 39 ist eine Aufnahme 41 mit Anschlag 42 und Abstreifeinrichtung 32 angeordnet. Im Beispiel ist die Aufnahme 41 im Querschnitt U-förmig, wobei ein unterer U-Schenkel die Abstreifeinrichtung 32 bildet, während ein oberer U-Schenkel den Anschlag 42 bildet.

In der Kaltstellung a geben die Rückhalteelemente 9 den Bypass 31 frei, so dass die Gasströmung 4 bei geringem Strömungswiderstand die Rückhalteeinrichtung 3 umgehen kann. In dieser Kaltstellung besitzt das Antriebselement 33a bspw. eine Bogenform mit einem vergleichsweise großen Bogenradius. Bei zunehmender Erwärmung verformt sich das Antriebselement 33, wobei insbesondere der Bogenradius abnimmt. Hierdurch verkürzt sich der Abstand zwischen einer hebelseitigen Anlenkstelle 43 und einer stationären Anlenkstelle 44, was zu einer Verstellbewegung des Stellhebels 40 und zu einem Verschwenken der Rückhalteelemente 9 um das Lager 39 führt. Zum Erreichen der Warmstellung b überstreifen die Rückhalteelemente 9 die Abstreifeinrichtung 32 und bleiben am Anschlag 42 hängen. Beim Abkühlen bleiben die Rückhalteelemente 9 zunächst an der Abstreifeinrichtung 32 hängen, wodurch sich der Zwischenzustand c einstellt. Bei weiterer Abkühlung ergibt sich dann ein Zustand, bei dem die Rückhaltelemente 9 über die Abstreifeinrichtung 32 abrutschen und dann quasi schlagartig in eine nach unten durchhängende Stellung ähnlich der Kaltstellung bewegt werden. Hierdurch wird eine intensive Abreinigung der angelagerten Partikel erreicht.

Darüber hinaus kann gemäß einer besonders vorteilhaften Ausführungsform vorgesehen sein, dass die Stelleinrichtung 30 mit einer Schlagkinematik 45 ausgestattet ist. Diese Schlagkinematik 45 ist so konzipiert, dass sie die temperaturbedingte Geometrieänderung des jeweiligen Antriebselements 33 in eine schlagartige Verstellbewegung der Rückhalteelemente 9 umwandelt. Beispielsweise kann zur Realisierung einer derartigen Schlagkinematik 45 eine Druckfeder 46 vorgesehen sein, die beim Verstellen des Antriebselements 33 von dessen Kaltzustand in dessen Warmzustand gespannt wird und dementsprechend einer Bewegung der Rückhalteelemente 9 entgegenwirkt. Gleichzeitig wird beim Spannen der Feder 46 deren Druckrichtung verändert. Die Ausrichtung der Druckfeder 46 ist dabei so gewählt, dass sie in der Kaltstellung und in der Warmstellung der Rückhalteelemente 9 jeweils einen stabilen Zustand besitzt, wobei sie zwischen diesen beiden stabilen Zuständen einen labilen Zustand aufweist. Beim Aufwärmen wirkt somit die Druckfeder 46 bis zum Erreichen ihres labilen Zustands der Verstellbewegung des Antriebselements 33 entgegen. Im labilen Zustand kippt das Kräftegleichgewicht jedoch um, so dass die Druckfeder 46 plötzlich die Verstellbewegung des Antriebselements 33 unterstützt, wodurch es zur gewünschten schlagartigen Verstellbewegung der Rückhalteelemente 9 kommt.

Die Schlagkinematik 45 ist in Fig. 15 stark vereinfacht und eher schematisch dargestellt. Sie kann insbesondere in das jeweilige Antriebselement 33 oder in eine Kopplung zwischen dem Antriebselement 33 und den Rückhalteelementen 39 integriert sein.

Darüber hinaus ist es grundsätzlich möglich, zur Verbesserung der Abgasströmung ein Gebläse bzw. einen Ventilator einzusetzen.

Die vorstehenden Ausführungen zu möglichen Verbesserungen und Optionen sind grundsätzlich für alle vorstehend erläuterten Ausführungsformen sowie für andere Ausführungsformen anwendbar. Insbesondere sind sie nicht auf die in den Fig. 1 bis 15 gezeigten speziellen Ausführungsformen beschränkt.

## Patentansprüche

1. Partikelfiltervorrichtung zum Entfernen von Partikeln aus Abgas einer Feuerungsanlage (2), insbesondere einer Hausfeuerungsanlage,
mit mindestens einer Rückhalteeinrichtung (3) zur Montage in einem Abgasströmungspfad (4) der Feuerungsanlage (2), derart, dass die Rückhalteeinrichtung (3) im Betrieb der Feuerungsanlage (2) vom Abgas durchströmt wird,
**dadurch gekennzeichnet,**
**dass** die Rückhalteeinrichtung (3) mehrere Rückhalteelemente (9) aufweist, die relativ zueinander beweglich sind und die im montierten Zustand der Rückhalteeinrichtung (3) im Abgasströmungspfad (4) angeordnet sind, derart, dass sie im Betrieb der Feuerungsanlage (2) vom Abgas umströmt werden.

2. Partikelfiltervorrichtung nach Anspruch 1,
**dadurch gekennzeichnet,**
- **dass** zumindest einige der Rückhalteelemente (9) durch Borsten (10) gebildet sind, die sich im montierten Zustand der Rückhalteeinrichtung (3) quer zur Abgasströmungsrichtung (5) erstrecken, und/oder
- **dass** zumindest einige der Rückhalteelemente (9) durch Lamellen (11) gebildet sind, die sich im montierten Zustand der Rückhalteeinrichtung (3) parallel zur Abgasströmungsrichtung (5) erstrecken, und/oder
- **dass** zumindest einige der Rückhalteelemente (3) durch Zotteln (12) gebildet sind, die sich im montierten Zustand der Rückhalteeinrichtung (3) einenends im Wesentlichen quer zur Abgasströmungsrichtung (5) und anderenends im Wesentlichen parallel zur Abgasströmungsrichtung (5) erstrecken.

3. Partikelfiltervorrichtung nach Anspruch 1 oder 2,
**dadurch gekennzeichnet,**
**dass** die Rückhalteeinrichtung (3) zur Montage in einem Kamin (7) der Feuerungsanlage (2) ausgestaltet ist, in dem der Abgasströmungspfad (4) parallel zur Schwerkraftrichtung (8) verläuft.

4. Partikelfiltervorrichtung nach einem der Ansprüche 1 bis 3,
**dadurch gekennzeichnet,**
**dass** die Rückhalteeinrichtung (3) eine Tragstruktur (13) aufweist, an der die Rückhalteelemente (9) angebracht sind und mit der die Rückhalteeinrichtung (3) im Abgasströmungspfad (4) montierbar ist.

5. Partikelfiltervorrichtung nach einem der Ansprüche 1 bis 4,
**dadurch gekennzeichnet,**
**dass** eine Tragstruktur (13) der Rückhalteeinrichtung (3) im montierten Zustand unmittelbar an einer den Abgasströmungspfad (4) quer zur Abgasströmungsrichtung (5) begrenzenden Wandung (6) angeordnet ist, wobei insbesondere vorgesehen sein kann, dass sich die Tragstruktur (13) ringförmig oder schraubenförmig entlang der Wandung (6) erstreckt.

6. Partikelfiltervorrichtung nach einem der Ansprüche 1 bis 4,
**dadurch gekennzeichnet,**
**dass** eine Tragstruktur (13) der Rückhalteeinrichtung (3) im montierten Zustand mittels einer Aufhängung (14) in einem vertikalen Abgasströmungspfad (4) aufgehängt ist, wobei insbesondere vorgesehen sein kann, dass die Aufhängung (14) so ausgestaltet ist, dass die Tragstruktur (13) mit Hilfe der Aufhängung (14) im Abgasströmungspfad (4) höhenverstellbar ist.

7. Partikelfiltervorrichtung nach Anspruch 6,
**dadurch gekennzeichnet,**
**dass** die Tragstruktur (13) mindestens einen Tragring (16) umfasst, von dem mehrere als Borsten (10) ausgestaltete Rückhalteelemente (9) bis zu einer den Abgasströmungspfad (4) quer zur Abgasströmungsrichtung (5) begrenzenden Wandung (4) nach außen abstehen, wobei insbesondere vorgesehen sein kann,
- **dass** innen am Tragring (16) mehrere als Lamellen (11) ausgestaltete Rückhalteelemente (9) über die vom Tragring (16) umschlossene Ringfläche verteilt angeordnet sind, oder
- **dass** innen am Tragring (16) mehrere als Zotteln (12) ausgestaltete Rückhalteelemente (9) angeordnet sind, oder
- **dass** am Tragring (16) mehrere als Lamellen (11) ausgestaltete Rückhalteelemente (9) entlang des Tragrings (16) verteilt angeordnet sind, die distal zu diesem Tragring (16) einen weiteren Tragring (17) tragen, von dem mehrere als Borsten (10) ausgestaltete Rückhalteelemente (9) nach innen abstehen.

8. Partikelfiltervorrichtung zumindest nach Anspruch 6,
**dadurch gekennzeichnet,**
**dass** mittels der Aufhängung (14) mehrere Rückhalteeinrichtungen (3) im Abgasströmungspfad (4) übereinander angeordnet sind, wobei insbesondere vorgesehen sein kann, die jeweilige Tragstruktur (13) als zentralen Tragkern (21) auszugestalten, von dem sich als Borsten (10) ausgestaltete Rückhalteelemente (9) nach außen bis zu einer den Abgasströmungspfad (4) quer zur Abgasströmungsrichtung (5) begrenzenden Wandung (6) erstrecken, wobei insbesondere vorgesehen sein kann, die Dichte der Rückhalteelemente (9) der einzelnen Rückhalteeinrichtungen (3) in der Abgasströmungsrichtung (9) zu variieren.

9. Partikelfiltervorrichtung nach einem der Ansprüche 1 bis 8,
**dadurch gekennzeichnet,**
- **dass** zumindest eine Rütteleinrichtung (24) zum Einleiten von Störungen, z.B.
in Form von Schwingungen, in die jeweilige Rückhalteeinrichtung (3) und/oder in die Rückhalteelemente (9) vorgesehen ist,
- wobei insbesondere vorgesehen sein kann, dass die Rütteleinrichtung (24) als Klopfeinrichtung oder als Vibrationseinrichtung ausgestaltet ist,
- wobei insbesondere vorgesehen sein kann, dass die Rückhalteelemente (9) zumindest teilweise magnetisch anziehbar ausgestaltet sind und dass die Rütteleinrichtung (24) die Störungen mittels elektromagnetischer Kräfte in die Rückhalteelemente (9) einleitet.

10. Partikelvorrichtung nach einem der Ansprüche 1 bis 9,
**dadurch gekennzeichnet,**
- **dass** eine Ladeeinrichtung (26) zum Erzeugen einer elektrostatischen Aufladung der jeweiligen Rückhalteeinrichtung (3) und/oder der Rückhalteelemente (9) vorgesehen ist,
- wobei insbesondere vorgesehen sein kann, dass die Ladeeinrichtung (26) einen Hochspannungsgenerator (27) aufweist, der einerseits mit der jeweiligen Rückhalteeinrichtung (3) und/oder mit den Rückhalteelementen (9) und andererseits mit einer Elektrode (28) elektrisch verbunden ist, die im Abgasströmungspfad (4) stromauf der jeweiligen Rückhalteeinrichtung (3) angeordnet ist,
- wobei insbesondere vorgesehen sein kann, dass die Elektrode (28) als Drallerzeuger (29) ausgestaltet ist.

11. Partikelfiltervorrichtung nach einem der Ansprüche 1 bis 10,
**dadurch gekennzeichnet,**
**dass** die Rückhalteeinrichtung (3) eine Stelleinrichtung (30) aufweist, mit der die Raumlage der Rückhalteelemente (9) zumindest zwischen zwei Stellungen verstellbar ist, wobei insbesondere vorgesehen sein kann, dass die Stelleinrichtung (30) die Rückhalteelemente (9) zumindest zwischen einer Kaltstellung, welche die Rückhalteelemente (9) während einer Kaltstartphase der Feuerungsanlage (2) einnehmen, und einer Warmstellung verstellt, welche die Rückhalteelemente (9) während eines Warmbetriebs der Feuerungsanlage (2) einnehmen.

12. Partikelfiltervorrichtung nach Anspruch 11,
**dadurch gekennzeichnet,**
**dass** die Rückhalteeinrichtung (3) in der Kaltstellung der Rückhalteelemente (9) einen kleineren Durchströmungswiderstand aufweist als in der Warmstellung der Rückhaltelemente (9), wobei insbesondere vorgesehen sein kann, dass die Rückhaltelemente (9) in ihrer Kaltstellung einen Bypass (31) zur Umgehung der Rückhaltelemente (9) freigeben, der in der Warmstellung der Rückhaltelemente (9) verschlossen ist.

13. Partikelfiltervorrichtung nach Anspruch 11 oder 12,
**dadurch gekennzeichnet,**
**dass** die Stelleinrichtung (30) zumindest ein Antriebselement (33) aufweist, das temperaturabhängig seine Geometrie ändert, wobei die Stelleinrichtung (30) die Geometrieänderung des Antriebselements (33) zum Verstellen der Rückhalteelemente (9) verwendet, wobei insbesondere vorgesehen sein kann, dass das jeweilige Antriebselement (33) aus einem Bimetall oder aus einem Formgedächtnismetall besteht.

14. Partikelfiltervorrichtung nach Anspruch 13,
**dadurch gekennzeichnet,**
**dass** die Stelleinrichtung (30) eine Schlagkinematik (45) aufweist, welche die Geometrieänderung des jeweiligen Antriebselements (33) schlagartig in eine Verstellbewegung der Rückhalteelemente (9) umwandelt, wobei insbesondere vorgesehen sein kann, dass die Schlagkinematik (45) in das jeweilige Antriebselement (33) oder in eine Kopplung (40, 46) zwischen dem jeweiligen Antriebselement (33) und den Rückhalteelementen (9) integriert ist.

15. Partikelfiltervorrichtung nach einem der Ansprüche 11 bis 14,
**dadurch gekennzeichnet,**
**dass** zumindest eine Abstreifeinrichtung (32) so im Verstellweg der Rückhalteelemente (9) angeordnet ist, dass die Rückhalteelemente (9) beim Verstellen zwischen der Kaltstellung und der Warmstellung daran abstreifen.
